# EUROPÄISCHE PATENTSCHRIFT

(11) **EP 0 990 790 B1**
(45) Veröffentlichungstag und Bekanntmachung des Hinweises auf die Patenterteilung: **21.01.2004**
(21) Anmeldenummer: 99114322.3
(22) Anmeldetag: 21.07.1999
(51) Int. Cl.: F02M 37/22

(54) **Kraftstoffilter**
Fuel filter
Filtre à carburant

(30) Priorität: 29.09.1998 DE 19844559
(43) Veröffentlichungstag der Anmeldung: 05.04.2000
(73) Patentinhaber: ROBERT BOSCH GMBH, 70442 Stuttgart (DE)
(72) Erfinder: Ortiz, David, 28043 Madrid (ES)

(56) Entgegenhaltungen:
- US-A- 4 906 029
- US-A- 5 076 920
- US-A- 5 382 359
- US-A- 5 798 048

## Beschreibung

### Stand der Technik

Die Erfindung geht aus von einem Kraftstoffilter mit einem aus Kunststoff bestehenden Gehäuse nach der im Oberbegriff des Anspruchs 1 näher angegebenen Gattung.

Es ist schon ein solches Kraftstoffilter mit einem aus Kunststoff bestehenden Gehäuse aus der DE 15 76 348 C3 bekannt, bei dem das Gehäuse aus einem elektrisch nicht leitenden Kunststoff besteht. Werden solche Filter im Kraftstoffversorgungssystem von Kraftfahrzeugen eingesetzt, so können durch elektrostatische Aufladungen im Kraftstoffilter Störungen oder Beschädigungen auftreten, die einen einwandfreien Betrieb der Kraftstoffversorgung beeinträchtigen.

Aus der DE 195 30 526 C2 ist deshalb ein Kraftstoffilter mit einem elektrisch leitfähige Gehäuse bekannt, das in Kraftfahrzeugen verwendet wird und einen elektrischen Erdungsanschluß aufweist. Das Gehäuse besteht hier aus Metall und hat einen fließgepreßten Aluminiumdeckel, an dem ein angeformter Nippel liegt, um daran eine Blechlasche für den Erdungsanschluß anzuschweißen. Dieses Kraftstoffilter vermeidet zwar eine elektrostatische Aufladung, benötigt dazu aber ein aufwendig bauendes und teueres metallisches Gehäuse.

Ferner ist es aus der DE 195 19 481 A1 bekannt, zur Vermeidung einer elektrostatischen Aufladung ein Kraftstoffilter mit einem mehrschichtigen Gehäuse aus Kunststoff herzustellen, das mindestens drei Schichten aufweist. Dabei bestehen die innere und äußere Schicht aus einem elektrisch leitenden Kunststoff, während die dazwischenliegende Schicht nicht leitfähig ist und daher bessere Dichteigenschaften gegenüber aggressiven Kraftstoff-Bestandteilen aufweist. Auch dieses Gehäuse des Kraftstoffilters baut relativ aufwendig, wobei zu seiner Herstellung ein aufwendiges Mehrkomponentenspritzgießverfahren angewandt werden kann.

Schleißlich zeigt die US 5.382.359 A ein Kunststoff Filter gehäuse mit einer Leitfähigen auf gespritzten inneren und äußeren Beschichtung.

### Vorteile der Erfindung

Das erfindungsgemäße Kraftstoffilter mit einem aus Kunststoff bestehenden Gehäuse und mit den kennzeichnenden Merkmalen des Anspruchs 1 hat demgegenüber den Vorteil, daß bei ihm eine einfache und kostengünstige Bauweise des Gehäuses aus elektrisch nicht leitfähigem Kunststoff beibehalten wird und sich trotzdem eine elektrostatische Aufladung mit einfachen Mitteln vermeiden läßt. Dabei ist besonders günstig, daß sich das elektrisch leitfähige Material nachträglich am fertigen Kraftstoffilter anbringen läßt. Besonders vorteilhaft ist hierbei die Verwendung einer elektrisch leitfähigen Lackierung, zumal bei der Lackierung von Kunststoffteilen umfangreiche Erfahrungen vorliegen. Für das Kunststoffgehäuse kann dabei ein Material verwendet werden,das relativ kostengünstig ist und doch gute mechanische und chemische Eigenschaften aufweist. Der Materialverbrauch für den elektrisch leitfähigen Streifen an der Oberfläche des Gehäuses ist verhältnismäßig sehr gering. Das Gehäuse baut platzsparend und kostengünstig, wobei bisherige Bauelemente unverändert übernommen werden können. Durch die in den Unteransprüchen aufgeführten Maßnahmen sind vorteilhafte Weiterbildungen und Verbesserungen des im Hauptanspruch angegebenen Kraftstoffilters möglich.

### Zeichnung

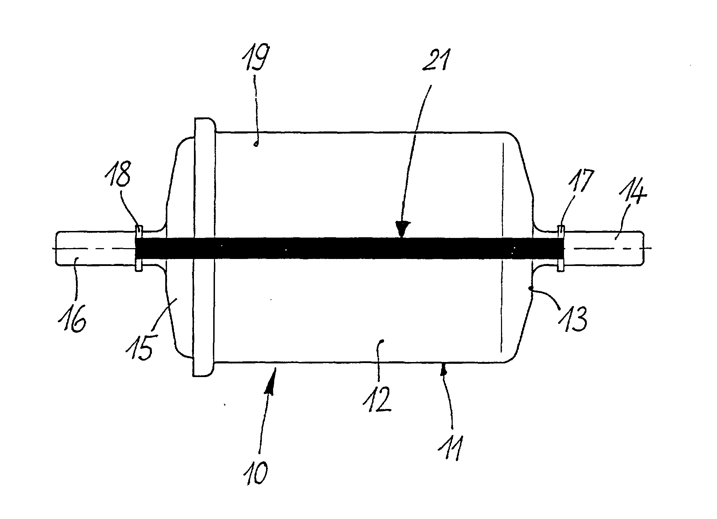

Ein Ausführungsbeispiel der Erfindung ist in der Zeichnung dargestellt und in der nachfolgenden Beschreibung näher erläutert. Die einzige Figur zeigt eine Ansicht des erfindungsgemäßen Kraftstoffilters.

### Beschreibung des Ausführungsbeispiels

Die einzige Figur zeigt in Ansicht ein Kraftstoffilter 10, das in einer Bauart als Leitungsfilter ausgebildet ist, und wie es in Kraftstoffversorgungssystemen von Kraftfahrzeugen verwendet wird. Das Kraftstoffilter 10 hat ein Gehäuse 11, das vollkommen aus Kunststoff besteht und zwar aus einem elektrisch nicht leitfähigen Kunststoff. Das Gehäuse 11 besteht zu diesem Zweck aus einem becherförmigen Gehäuseteil 12, das an seinem Boden 13 einen zentrischen, rohrförmigen Anschlußstutzen 14 aufweist. Das becherförmige Gehäusteil 12 ist an seinem offenen Ende durch einen dicht und fest in ihm befestigten Deckel 15 verschlossen, der ebenfalls einen zentrisch angeordneten, rohrförmigen Anschlußstutzen 16 aufweist. Die beiden Anschlußstutzen 14, 16 liegen somit koaxial am Gehäuse 11 und bilden einen Zulauf und einen Ablauf für das Kraftstoffilter 10. Im Inneren des Gehäuses 11 ist in an sich bekannter Weise ein nicht näher gezeichneter Filtereinsatz angeordnet, in dem der durchfließende Kraftstoff gereinigt wird. Ferner ist an jedem Anschlußstutzen 14 bzw. 16 ein als Anschlag für die Rohrleitung dienender Bund 17 bzw. 18 angeordnet.

Wie die Figur ferner deutlich zeigt, ist auf der nach außen weisenden Oberfläche 19 des aus Kunststoff bestehenden Gehäuses 11 ein durchgehender Streifen 21 angeordnet, der sich vom ersten Anschlußstutzen 14 bis zum zweiten Anschlußstutzen 16 erstreckt, und der aus einem elektrisch leitfähigen Material besteht. In bevorzugter Weise wird für dieses Material eine Lackierung verwendet, die durch entsprechende Einlagerungen elektrisch leitfähig gemacht ist. Diese als Streifen 21 ausgeführte Lackierung erstreckt sich zwischen den Bunden 17 und 18, wobei diese Lackierung nachträglich nach dem Herstellen des Kraftstoffilters 10 an der Oberfläche des Gehäuses 11 aufgetragen wird. Diese streifenförmige Lackierung 21 haftet gut auf dem Kunststoff des Gehäuses 11 und stellt eine durchgängige, elektrisch leitfähige Verbindung zwischen den beiden Anschlüssen 14, 16 her. Die Breite des Streifens 21 wird zweckmäßigerweise etwas kleiner gewählt als der Durchmesser des Anschlußstutzens 14 bzw. 16 und beträgt bei handelsüblichen Filtern vorzugweise zwischen 5 und 10 mm. Die Dicke des Streifens 21 ist relativ gering, so daß der Platzbedarf am Kraftstoffilter 10 vernachlässigbar ist. Mit dem als Lackierung aufgebrachten Streifen 21 lassen sich die Ecken, Kanten, Krümmungen und Fugen an der Oberfläche 19 des Gehäuses 11 ohne Schwierigkeiten überwinden.

Das Kraftstoffilter 10 wird mit seinen Anschlußstutzen 14, 16 in einem Kraftfahrzeug in der Regel freitragend an Kraftstoffleitungen angeschlossen, die in der Regel aus einem elektrisch leitenden Material bestehen. Durch den elektrisch leitfähigen Streifen 21 können nun elektrostatische Aufladungen von einer Seite des Kraftstoffilters 10 auf dessen andere Seite weitergeleitet werden, sowie Aufladungen im Filter abgebaut werden, so daß unerwünschte, materialzerstörende Spannungsüberschläge vermieden werden. Durch zusätzlich aufgesteckte, nicht näher gezeichnete Rohrklemmen im Bereich der Bunde 17 bzw. 18 läßt sich erreichen, daß eine einwandfreie elektrische Verbindung zwischen den Rohrleitungen und der streifenförmigen Lackierung 21 hergestellt wird.

Durch die Anordnung des elektrisch leitfähigen Streifens 21 an der Oberfläche 19 lassen sich auch hohe Sicherheitsanforderungen erfüllen, da der einwandfreie Zustand der streifenförmigen Lackierung 21 von außen leicht erkennbar ist.

Selbstverständlich sind an der gezeigten Ausführungsform Änderungen möglich, ohne vom Gedanken der Erfindung abzuweichen. So kann die Querschnittsgröße des leitfähigen Streifens 21 an die jeweiligen Verhältnisse angepaßt werden; zweckmäßig kann auch ein zweiter oder dritter parallel geführter angeordneten Streifen sein. Obwohl der Verlauf des Streifens 21 in einer Ebene vorteilhaft ist, kann auch bei Bedarf davon abgewichen werden. Die streifenförmige Lackierung kann auch gut bei mehrteiligen Gehäusen angewandt werden. Obwohl die Ausbildung des Streifens als elektrisch leitfähige Lackierung besonders zweckmäßig ist, kann dieser leitfähige Streifen auch in anderer Weise hergestellt werden, z.B. durch Materialauftragung oder durch Anbringen eines entsprechenden Bandmaterials aus elektrisch leitfähigem Material, wie z.B. einer bandförmigen Folie; Folie und Lackierung könnten auch kombiniert werden und gemeinsam den leitfähigen Streifen bilden.

## Patentansprüche

1. Kraftstoffilter mit einem aus Kunststoff bestehenden Gehäuse, an dem wenigstens zwei Anschlüsse für einen Zulauf und einen Ablauf ausgebildet sind und bei dem der Kunststoff aus elektrisch nicht leitendem Material besteht, insbesondere für Kraftfahrzeuge, **dadurch gekennzeichnet, daß** an der nach außen weisenden Oberfläche (19) des aus Kunststoff bestehenden Gehäuses (11) zwischen den beiden Anschlüssen (14, 16) ein durchgehender Streifen (21) aus elektrisch leitfähigem Material angeordnet ist.

2. Kraftstoffilter nach Anspruch 1, **dadurch gekennzeichnet, daß** das Material eine elektrisch leitfähige Lackierung ist, die als Streifen (21) aufgetragen ist.

3. Kraftstoffilter nach Anspruch 1 oder 2, **dadurch gekennzeichnet, daß** die streifenförmige Lackierung (21) über ihre gesamte Länge im wesentlichen einen gleich großen Querschnitt aufweist.

4. Kraftstoffilter nach einem der Ansprüche 1 bis 3, **dadurch gekennzeichnet, daß** der Kraftstoffilter (10) als Leitungsfilter mit an entgegengesetzten Stirnseiten liegenden Anschlußstutzen (14, 16) ausgebildet ist.

5. Kraftstoffilter nach Anspruch 4, **dadurch gekennzeichnet, daß** sich die streifenförmige Lackierung (21) zwischen den beiden rohrförmigen Anschlußstutzen (14, 16) erstreckt.

6. Kraftstoffilter nach Anspruch 4 oder 5, **dadurch gekennzeichnet, daß** die Breite der streifenförmigen Lackierung (21) kleiner ist als der Außendurchmesser der Anschlußstutzen (14, 16).

7. Kraftstoffilter nach einem der Ansprüche 1 bis 6, **dadurch gekennzeichnet, daß** das Gehäuse (11) aus einem becherförmigen Gehäusteil (12) und einem Deckel (15) besteht und die streifenförmige Lackierung (21) deren Trennfuge übergreift.

8. Kraftstoffilter nach einem der Ansprüche 1 bis 7, **dadurch gekennzeichnet, daß** mehrere, insbesondere zwei oder drei, parallel zueinander geführte, radial zueinander versetzt liegende Streifen an der Oberfläche des Gehäuses angeordnet sind.

9. Kraftstoffilter nach einem der Ansprüche 1 bis 8, **dadurch gekennzeichnet, daß** die Breite der streifenförmigen Lackierung (21) zur Sicherung einer günstigen elektrischen Leitfähigkeit eine Größe zwischen 5 und 10 mm aufweist.

## Claims

1. Fuel filter having a housing which consists of plastic and on which at least two connections for an inlet and an outlet are formed and in which the plastic consists of electrically nonconductive material, in particular for motor vehicles, **characterized in that** a continuous strip (21) of electrically conductive material is arranged on the outwardly pointing surface (19) of the plastic housing (11) between the two connections (14, 16).

2. Fuel filter according to Claim 1, **characterized in that** the material is an electrically conductive coating which is applied in the form of a strip (21).

3. Fuel filter according to Claim 1 or 2, **characterized in that** the strip-shaped coating (21) has essentially a cross section of equal size over its entire length.

4. Fuel filter according to one of Claims 1 to 3, **characterized in that** the fuel filter (10) is designed as a line filter with connecting stubs (14, 16) situated on opposite end sides.

5. Fuel filter according to Claim 4, **characterized in that** the strip-shaped coating (21) extends between the two tubular connecting stubs (14, 16).

6. Fuel filter according to Claim 4 or 5, **characterized in that** the width of the strip-shaped coating (21) is smaller than the outside diameter of the connecting stubs (14, 16).

7. Fuel filter according to one of Claims 1 to 6, **characterized in that** the housing (11) comprises a cup-shaped housing part (12) and a cover (15) and the strip-shaped coating (21) fits over the gap separating them.

8. Fuel filter according to one of Claims 1 to 7, **characterized in that** a plurality of strips, in particular two or three strips, which are guided parallel to one another and are offset radially to one another are arranged on the surface of the housing.

9. Fuel filter according to one of Claims 1 to 8, **characterized in that** the width of the strip-shaped coating (21) is between 5 and 10 mm in order to ensure favourable electrical conductivity.

## Revendications

1. Filtre à carburant comportant un boîtier en matière synthétique, sur lequel sont formés au moins deux raccordements pour une amenée et pour une sortie et pour lequel la matière synthétique est en un matériau non électroconducteur, en particulier pour des véhicules automobiles,
**caractérisé en ce que**
sur la surface (19), orientée vers l'extérieur, du boîtier (11) en matière synthétique, une bande (21) continue en un matériau électroconducteur est disposée entre les deux raccords (14, 16).

2. Filtre à carburant selon la revendication 1,
**caractérisé en ce que**
le matériau est une couche de laque électroconductrice qui est appliquée en tant que bande (21).

3. Filtre à carburant selon la revendication 1 ou 2,
**caractérisé en ce que**
la couche de laque (21) en bande présente sur toute sa longueur une section transversale pratiquement de la même taille.

4. Filtre à carburant selon l'une des revendications 1 à 3,
**caractérisé en ce que**
le filtre à carburant (10) est formé en tant que filtre de conduite comportant des embouts (14, 16) situés sur les côtés frontaux opposés.

5. Filtre à carburant selon la revendication 4,
**caractérisé en ce que**
la couche de laque (21) en bande s'étend entre les deux embouts (14, 16) tubulaires.

6. Filtre à carburant selon la revendication 4 ou 5,
**caractérisé en ce que**
la largeur de la couche de laque (21) en bande est inférieure au diamètre extérieur des embouts (14, 16).

7. Filtre à carburant selon l'une des revendications 1 à 6,
**caractérisé en ce que**
le boîtier (11) est constitué d'une partie de boîtier (12) en forme de godet et d'un couvercle (15) et la couche de laque (21) en bande chevauche leur joint de séparation.

8. Filtre à carburant selon l'une des revendications 1 à 7,
**caractérisé en ce que**
plusieurs, en particulier deux ou trois, bandes guidées parallèlement l'une à l'autre et situées en décalage radial l'une par rapport à l'autre sont disposées sur la surface du boîtier.

9. Filtre à carburant selon l'une des revendications 1 à 8,
**caractérisé en ce que**
la largeur de la couche de laque (21) en bande a une taille comprise entre 5 et 10 mm pour assurer une conductibilité électrique avantageuse.
